(19) Europäisches Patentamt European Patent Office Office européen des brevets

(11) **EP 3 150 660 B1**

(12) **EUROPEAN PATENT SPECIFICATION**

(45) Date of publication and mention of the grant of the patent:
**27.02.2019 Bulletin 2019/09**

(51) Int Cl.:
*C08L 7/00* (2006.01)  *B60C 1/00* (2006.01)
*C08K 5/098* (2006.01)  *C08L 9/00* (2006.01)
*C08L 57/02* (2006.01)

(21) Application number: **15799541.6**

(22) Date of filing: **29.05.2015**

(86) International application number:
**PCT/JP2015/065695**

(87) International publication number:
**WO 2015/182780 (03.12.2015 Gazette 2015/48)**

(54) **RUBBER TIRE-TREAD COMPOSITION AND PASSENGER-VEHICLE PNEUMATIC TIRE USING SAME**

KAUTSCHUKREIFENLAUFFLÄCHENZUSAMMENSETZUNG UND PASSAGIERFAHRZEUGLUFTREIFEN DAMIT

COMPOSITION DE CAOUTCHOUC DE BANDES DE ROULEMENT DE PNEUS ET VÉHICULE PASSAGER PNEUMATIQUE LES UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2014 JP 2014111307**

(43) Date of publication of application:
**05.04.2017 Bulletin 2017/14**

(73) Proprietor: **Bridgestone Corporation Tokyo 104-8340 (JP)**

(72) Inventor: **SAKURAI, Hideyuki Tokyo 104-8340 (JP)**

(74) Representative: **Lang, Johannes Bardehle Pagenberg Partnerschaft mbB Patentanwälte, Rechtsanwälte Prinzregentenplatz 7 81675 München (DE)**

(56) References cited:
**WO-A1-2008/084860  WO-A1-2011/158509
FR-A1- 2 451 279  JP-A- S5 974 135
JP-A- 2006 249 230  JP-A- 2007 099 868
JP-A- 2009 235 274  JP-A- 2009 256 540
JP-A- 2010 285 112  JP-A- 2012 131 860
JP-A- 2012 201 702  JP-A- 2014 009 300**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a passenger-vehicle pneumatic tire using a rubber tire-tread composition.

BACKGROUND ART

There is conventionally a technology of improving both the initial grip performance and the running stability of a tire by using, for a tire-tread, a rubber composition comprising a rubber component, and at least one selected from the group consisting of C9-based resins having a softening point of 130°C or higher and 190°C or lower in an amount of 5 to 80 parts by mass and containing indene, and at least one selected from the group consisting of terpene homopolymer resins and terpene-phenol copolymer resins having a softening point of 130°C or higher in an amount of 10 to 80 parts, and a liquid styrene-butadiene copolymer in an amount of 10 to 200 parts by mass, all based on 100 parts by mass of the rubber component (PTL1). WO 2011/158509 A1 refers to a tire rubber composition comprising a diene rubber, a silica of specific surface area, a silane coupling agent, softening agent component comprising a terpene resin and oil, and mixture of fatty acid salt and fatty acid ester.

CITATION LIST

PATENT LITERATURE

PTL1: JP 2009-235274 A

SUMMARY OF INVENTION

TECHNICAL PROBLEM

The present invention has been achieved under such a situation, and has an object to provide a rubber composition capable of improving simultaneously the dry road steering stability and the dirt road durability of a pneumatic tire, and a pneumatic tire, particularly a passenger-vehicle pneumatic tire using the same.

SOLUTION TO PROBLEM

As a result of exhaustive studies to solve the above-mentioned problem, the present inventor has found that there can be obtained a rubber composition capable of solving the problem, by blending a rubber component comprising not less than a certain amount of a natural rubber and/or a synthetic isoprene rubber with predetermined amounts of a specific resin and fatty acid metal salt. The present invention has been completed based on this finding.
That is, the present invention is to provide:
a passenger-vehicle pneumatic tire, wherein a rubber composition is used for a tread member of the pneumatic tire, wherein the rubber tire-tread composition comprising (A) a rubber component comprising 30% by mass or higher of one or more isoprene-based rubbers selected from the group consisting of natural rubbers and synthetic isoprene rubbers, and (B) at least one resin selected from the group consisting of rosin acid resins, C9-based petroleum resins, alkylphenol formaldehyde resins and terpene phenol resins in an amount of 5 to 50 parts by mass, and (C) a fatty acid metal salt in an amount of 0.5 to 10 parts by mass, both based on 100 parts by mass of the rubber component.

ADVANTAGEOUS EFFECTS OF INVENTION

According to the present invention, there is provided a passenger-vehicle pneumatic tire using a rubber composition capable of simultaneously improving the dry road steering stability and the dirt road durability of a pneumatic tire.

DESCRIPTION OF EMBODIMENTS

First, the rubber composition used according to the present invention will be described.

[Rubber composition]

The rubber composition used according to the present invention comprises (A) a rubber component comprising 30% by mass or higher of one or more isoprene-based rubbers selected from the group consisting of natural rubbers and synthetic isoprene rubbers, and (B) at least one resin selected from the group consisting of rosin acid resins, C9-based petroleum resins, alkylphenol formaldehyde resins and terpene phenol resins in an amount of 5 to 50 parts by mass, and (C) a fatty acid metal salt in an amount of 0.5 to 10 parts by mass, both based on 100 parts by mass of the rubber component.

[(A) rubber component]

In the rubber composition used according to the present invention, as the (A) rubber component, there is used a rubber component comprising 30% by mass or higher of one or more isoprene-based rubbers selected from the group consisting of natural rubbers and synthetic isoprene rubbers.

The natural rubber and the synthetic isoprene rubber are not especially limited, and can suitably be selected from conventionally well-known ones. The synthetic isoprene rubber is preferably one having a weight-average molecular weight of $4 \times 10^5$ or higher and a cis-bond content of 95% or higher. The weight-average molecular weight is a value in terms of standard polystyrenes measured by gel permeation chromatography (GPC).

In the present invention, the content of one or more isoprene-based rubbers selected from the group consisting of natural rubbers and synthetic isoprene rubbers in the (A) rubber component is, from the viewpoint of providing a rubber composition capable of exhibiting good low-temperature characteristics and well balanced wet grip performance and dry grip performance, necessarily 30% by mass or higher, preferably 50 to 100% by mass, more preferably 70 to 100% by mass, still more preferably 80 to 100% by mass, and especially preferably 100% by mass.

Further, in the (A) rubber component, in addition to the above isoprene-based rubber, as required, there can be concurrently used rubber components other than the above isoprene-based rubber in a proportion of 70% by mass or lower, preferably 50 to 0% by mass, more preferably 30 to 0% by mass, and still more preferably 20 to 0% by mass. The other rubber components are preferably synthetic diene-based rubbers other than the synthetic isoprene rubbers, and suitably includes, for example, one or more synthetic diene-based rubbers selected from the group consisting of polybutadiene rubbers, styrene-butadiene copolymer rubbers, ethylene-propylene-diene terpolymer rubbers, acrylonitrile-butadiene copolymer rubbers, chloroprene rubbers and mixtures thereof. Further, a part thereof may be modified diene-based rubbers obtained by using a modifying agent, for example, tin tetrachloride, silicon tetrachloride or an alkoxysilane compound.

In the (A) rubber component, the styrene-butadiene copolymer rubber accounts for, from the viewpoint of improving the dirt road durability of the pneumatic tire, preferably 1 to 40% by mass, more preferably 1 to 30% by mass, still more preferably 1 to 10% by mass, and further still more preferably 1 to 5% by mass in the (A) rubber component.

[(B) resin]

Hereinafter, there will be described (B) at least one resin (hereinafter, abbreviated to a "(B) resin" in some cases) selected from the group consisting of rosin acid resins, C9-based petroleum resins, alkylphenol formaldehyde resins and terpene phenol resins.

The rosin acid resin that is the (B) resin is a residue remaining after balsams of pine resins, saps of pinaceous plants, are collected and turpentine essential oils are distilled, and is a natural resin having rosin acids (abietic acid, palustric acid, and isopimaric acid) as main ingredients, and modified resins and hydrogenated resins obtained by processing the natural resin by means of modification, and hydrogenation. Examples of the rosin acid resin include natural resin rosins, polymerized rosins and partially hydrogenated rosins thereof; glycerol ester rosins, and partially hydrogenated rosins, completely hydrogenated rosins and polymerized rosins thereof; and pentaerythritol ester rosins, and partially hydrogenated rosins and polymerized rosins thereof. The rosins as natural resins include gum rosins, tall oil resins, and wood rosins contained in raw pine resins and tall oils.

Specific examples of the rosin acid resin include trade name "Neotall 105 "(manufactured by Harima Chemicals, Inc.), trade name "SN-Tack 754"(manufactured by San Nopco Ltd.), trade names "Lime Resin No. 1", "Pencel A" and "Pencel AD "(manufactured by Arakawa Chemical Industries, Ltd.), and trade names "Polypale" and "Pentaline C"(manufactured by Eastman Chemical Co.).

The C9-based petroleum resin that is the (B) resin relevant to the present invention is obtained, for example, by using, as raw materials, vinyltoluene, alkylstyrenes, indene, α-methylstyrene, β-methylstyrene, γ-methylstyrene, o-methylstyrene, p-methylstyrene, and vinyltoluene, which are C9 fractions by-produced together with petrochemical fundamental raw materials such as ethylene and propylene by thermal cracking of naphtha in petrochemical industries, and also styrene, which are C8 fractions, methylindene, and 1,3-dimethylstyrene, which are C10 fractions, and further naphthalene, vinylnaphthalene, vinylanthracene, and p-tert-butylstyrene as well, and copolymerizing these C8 to C10 fractions as these are a mixture, for example, by using a Friedel-Crafts type catalyst. Unmodified C9-based petroleum resins include trade names "Neopolymer L-90", "Neopolymer 120" and "Neopolymer 130"(manufactured by JX Nippon Oil & Energy Corp.)

The above-mentioned C9-based petroleum resins may be modified petroleum resins modified with a compound having a hydroxide group, or an unsaturated carboxylic acid compound.

Here, C5/C9-based petroleum resins that are petroleum resins selected from the group consisting of aromatic-modified aliphatic petroleum resins and aliphatic-modified aromatic petroleum resins are excluded from the (B) C9-based petroleum resins relevant to the present invention. The C5/C9-based petroleum resins are solid polymers obtained by polymerizing C5 to C11 fractions originated from petroleums. Here, among the C5 to C11 fractions, resins containing more aliphatic fractions than aromatic fractions are referred to as aromatic-modified aliphatic petroleum resins; and among the C5 to C11 fractions, resins containing more aromatic fractions than aliphatic fractions, or containing the same amounts of the aliphatic fractions and the aromatic fractions are referred to as aliphatic-modified aromatic petroleum resins.

The alkylphenol formaldehyde resin that is, the (B) resin relevant to the present invention is obtained by a condensation reaction of an alkylphenol with formaldehyde under a catalyst. The alkylphenol formaldehyde resin specifically includes trade name "Hitanol 1502P"(manufactured by Hitachi Chemical Co., Ltd.), trade name "Tackirol 201 "(manufactured by Taoka Chemical Co., Ltd.), trade name "Tackirol 250-I"(a brominated alkylphenol formaldehyde resin having a bromination rate of 4%, manufactured by Taoka Chemical Co., Ltd.), trade name "Tackirol 250-III"(a brominated alkylphenol formaldehyde resin, manufactured by Taoka Chemical Co., Ltd.) and trade names "R7521P", "SP1068", "R7510PJ", "R7572P" and "R7578P"(manufactured by Schenectady Chemicals, Inc.).

The terpene phenol resin that is the (B) resin relevant to the present invention can be obtained by a method in which terpenes and various phenols are reacted by using a Friedel-Crafts type catalyst, or further condensed with formalin. The terpenes of the raw material are not especially limited, and preferably monoterpene hydrocarbons such as $\alpha$-pinene and limonene, more preferably terpenes containing $\alpha$-pinene, and especially preferably $\alpha$-pinene. In the present invention, terpene phenol resins having a high ratio of a phenol ingredient is suitable. The terpenes specifically include trade names "Tamanol 803L" and "Tamanol 901 "(manufactured by Arakawa Chemical Industries, Ltd.), and trade names "YS Polyster U" series, "YS Polyster T" series, "YS Polyster S" series, "YS Polyster G" series, "YS Polyster N" series, "YS Polyster K" series and "YS Polyster TH" series (manufactured by Yasuhara Chemical Co., Ltd.).

In the rubber composition used according to the present invention, the (B) resin may be used singly or in a combination of two or more. Further the content of the resin (B) is necessarily 5 to 50 parts by mass based on 100 parts by mass of the above-mentioned (A) rubber component. When the content of the resin (B) is lower than 5 parts by mass, there cannot be attained the object of the present invention that the dry road steering stability and the dirt road durability of the pneumatic tire are simultaneously improved; and when exceeding 50 parts by mass, the processability is reduced. Therefore, the content of the resin (B) is preferably in the range of 10 to 50 parts by mass, and more preferably 20 to 50 parts by mass.

In the present invention, by using the (B) resin in the above amount, there can be obtained a rubber composition capable of simultaneously improving the dry road steering stability and the dirt road durability of the pneumatic tire.

On the other hand, from the viewpoint of improving the wear resistance and the rolling resistance, the (B) C5/C9-based petroleum resin is preferably 10 to 20 parts by mass based on 100 parts by mass of the above-mentioned (A) rubber component.

[(C) fatty acid metal salt]

In the rubber composition used according to the present invention, a metal to be used in the (C) fatty acid metal salt includes at least one metal selected from the group consisting of Zn, K, Ca, Na, Mg, Co, Ni, Ba, Fe, Al, Cu and Mn, and is especially preferably Zn.

Further, in the rubber composition used according to the present invention, a fatty acid to be used for the (C) fatty acid metal salt includes fatty acids having a saturated or unsaturated, linear, branched or cyclic structure having 4 to 30 carbon atoms, or mixtures thereof. Among these, preferable are saturated or unsaturated, linear fatty acids having 10 to 22 carbon atoms. The saturated linear fatty acids having 10 to 22 carbon atoms include capric acid, lauric acid, myristic acid, pentadecylic acid, palmitic acid, margaric acid, stearic acid and arachidic acid. The unsaturated linear fatty acids having 10 to 22 carbon atoms include undecylenic acid, oleic acid, elaidic acid, cetoleic acid, erucic acid, brassidic acid, linoleic acid, linolenic acid and arachidonic acid.

In the rubber composition used according to the present invention, as required, a reinforcing filler can further be blended as a (D) ingredient.

[(D) reinforcing filler]

As a (D) reinforcing filler, there is preferably used one or more reinforcing fillers selected from the group consisting of carbon black and silica.

The carbon black is not especially limited, and can be used by suitably selecting any one from those conventionally used as reinforcing fillers of rubbers. There are used, for example, SRF, GPF, FEF, HAF, ISAF and SAF, and preferable are HAF, ISAF and SAF, which are excellent particularly in the wear resistance.

The carbon black may be used singly or in a combination of two or more.

On the other hand, the silica includes, for example, wet silica (hydrous silicic acid), dry silica (anhydrous silicic acid), calcium silicate and aluminum silicate, but among these, wet silica is preferable.

The BET specific surface area (measured according to ISO 5794/1) of the wet silica is preferably 40 to 350 $m^2/g$. A silica having a BET specific surface area in this range has an advantage of being capable of simultaneously satisfying the rubber reinforcement and the dispersibility in the rubber component. From this viewpoint, a silica having a BET specific surface area in the range of 80 to 300 $m^2/g$ is further preferable. As such a silica, there can be used commercially available products such as "Nipsil AQ" and "Nipsil KQ", manufactured by Tosoh Silica Corp., and "Ultrasil VN3", manufactured by Degussa GmbH.

The silica may be used singly or in a combination of two or more.

In the rubber composition used according to the present invention, the content of one or more reinforcing fillers selected from the group consisting of carbon black and silica is, based on 100 parts by mass of the (A) rubber component, preferably 20 to 120 parts by mass, and more preferably 35 to 100 parts by mass. When the content of the reinforcing fillers is 20 parts by mass or higher, the reinforcing effect is exhibited; and on the other hand, when being 120 parts by mass or lower, the rolling resistance never becomes too large.

The mass percent of the silica is, based on 100% by mass of the above-mentioned reinforcing fillers, from the viewpoint of improving the wet grip performance, preferably 50% by mass or higher, more preferably 70% by mass or higher, and still more preferably 90% by mass or higher.

(A silane coupling agent)

In the rubber composition used according to the present invention, in the case of using a silica as the reinforcing filler, for the purpose of further improving its reinforcement, a silane coupling agent can be blended.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide and dimethoxymethylsilylpropylbenzothiazolyl tetrasulfide, but from the viewpoint of the reinforcement improving effect, suitable are bis(3-triethoxysilylpropyl) polysulfide and 3-trimethoxysilylpropylbenzothiazolyl tetrasulfide.

These silane coupling agents may be used singly or in a combination of two or more.

In the rubber composition used according to the present invention, a preferable blend amount of a silane coupling agent is, though depending on the kind of the silane coupling agent, preferably selected in the range of 2 to 20 parts by mass based on 100 parts by mass of silica. When the amount is smaller than 2 parts by mass, the effect as a coupling agent is not sufficiently exhibited; and when exceeding 20 parts by mass, there arises a risk of causing the gelation of the rubber component. From the viewpoint of the effect as a coupling agent, the prevention of the gelation, the blend amount of the silane coupling agent is in the range of 5 to 15 parts by mass based on 100 parts by mass of silica.

(Action)

In the rubber composition used according to the present invention, by using, as the (A) rubber component, a rubber component comprising 30% by mass or higher of one or more isoprene-based rubbers selected from the group consisting of natural rubbers and synthetic isoprene rubbers, low-temperature characteristics caused by the lowness of Tg thereof can be secured. By blending the (A) rubber component further with a (B) resin and a fatty acid metal salt relevant to the present invention, there can be obtained a rubber composition capable of simultaneously improving the dry road steering stability and the dirt road durability of the pneumatic tire.

Here, the index of the dirt road durability includes a toughness (TF). The toughness (TF) is an integrated value of a stress-strain curve until a test piece is broken as measured according to JIS K6251:2010.

(Preparation of the rubber composition)

In the rubber composition used according to the present invention, as required, there can be incorporated various types of chemicals usually used in rubber industries, for example, a vulcanizing agent, a vulcanization accelerator, an antioxidant, an antiscorching agent, zinc white and stearic acid, in the ranges of not impairing the object of the present invention.

The vulcanizing agent includes sulfur; and the use amount thereof is, based on 100 parts by mass of the rubber component, preferably 0.1 to 10.0 parts by mass as a sulfur content, and more preferably 1.0 to 5.0 parts by mass. When the amount is smaller than 0.1 part by mass, there arises a risk of lowering the breaking strength, the wear resistance and the low-heat build-up property; and when exceeding 10.0 parts by mass, it causes the rubber elasticity to be lost.

The vulcanization accelerator usable in the present invention is not especially limited, but examples thereof include thiazoles such as M (2-mercaptobenzothiazole), DM (dibenzothiazolyl disulfide) and CZ (N-cyclohexyl-2-benzothiazolylsulfenamide), or guanidines such as DPG (1,3-diphenylguanidine); and the use amount thereof is, based on 100 parts by mass of the rubber component, preferably 0.1 to 5.0 parts by mass, and more preferably 0.2 to 3.0 parts by mass.

Further, examples of the antioxidant usable in the rubber composition used according to the present invention include 3C (N-isopropyl-N'-phenyl-p-phenylenediamine), 6C [N-(1,3-dimethylbutyl)-N'-phenyl-p-phenylenediamine], AW (6-ethoxy-2,2,4-trimethyl-1,2-dihydroquinoline) and high-temperature condensates of diphenylamine with acetone. The use amount thereof is, based on 100 parts by mass of the rubber matrix, preferably 0.1 to 6.0 parts by mass, and more preferably 0.3 to 5.0 parts by mass.

The rubber composition used according to the present invention can be prepared by kneading each of the above-mentioned ingredient by using a kneading machine such as a Banbury mixer, a roll or an internal mixer.

The rubber composition used according to the present invention thus prepared, since being capable of largely improving the dirt road durability of the pneumatic tire, is suitably used as a tread member of the pneumatic tire.

[Pneumatic tire]

The passenger-vehicle pneumatic tire according to the present invention uses the above-mentioned rubber composition for its tread member.

The passenger-vehicle pneumatic tire according to the present invention is manufactured by a usual method. That is, the rubber composition used according to the present invention incorporating various types of chemicals as described above as required is extruded into a tread member, in an unvulcanized stage of the rubber composition, and applied on a tire-building machine by a usual method to thereby form a green tire. The green tire is heated and pressurized in a vulcanizing machine to thereby obtain a tire.

As a gas to be filled in a tire, there can be used usual air or an air whose oxygen partial pressure is varied, or an inert gas such as nitrogen.

EXAMPLES

Then, the present invention will be described in more detail by way of Examples, but the present invention is not any more limited to these Examples. Here, various measurement and evaluation methods were carried out according to the following methods.

(1) A toughness (index) after thermal degradation

A test piece was fabricated with a cutting blade of DIN-53504 type S3A from a rubber sample cut out with a slicer at a predetermined position from 1 mm in depth to 2 mm in depth from a surface layer of the tread of each pneumatic tire thermally degraded in a large-size gear oven (in air) under the thermal degradation condition of at 100°C and for 48 hours, and measured for a toughness (TF) represented by an integrated value of a stress-strain curve until the test piece was broken, and evaluated for a toughness after thermal degradation by the following formulas, based on JIS K6251:2010. The higher the index value of the toughness, the better the dirt road durability.

Toughness index after thermal degradation = [{a toughness (TF) of a tread rubber composition of a pneumatic tire of each of Examples 1 to 14, or Comparative Examples 1 and 3 to 12 and 14 and Reference Example after thermal degradation}/{a toughness (TF) of a tread rubber composition of a pneumatic tire of Comparative Example 2 after thermal degradation}] × 100

Toughness index after thermal degradation = [{a toughness (TF) of a tread rubber composition of a pneumatic tire of Example 15 after thermal degradation}/{a toughness (TF) of a tread rubber composition of a pneumatic tire of Comparative Example 15 after thermal degradation}] × 100

Toughness index after thermal degradation = [{a toughness (TF) of a tread rubber composition of a pneumatic tire of Example 16 after thermal degradation}/{a toughness (TF) of a tread rubber composition of a pneumatic tire of Comparative Example 16 after thermal degradation}] × 100

Toughness index after thermal degradation = [{a toughness (TF) of a tread rubber composition of a pneumatic tire of Example 17 after thermal degradation}/{a toughness (TF) of a tread rubber composition of a pneumatic tire of Comparative Example 17 after thermal degradation}] × 100

(2) Appearance grading for the dirt road durability of pneumatic tires

A passenger-vehicle pneumatic radial tire of a tire size of 195/50R15 and a truck and bus pneumatic tire for test of a tire size of 245/70R19.5 using a rubber composition to be under test for their tread member were trially fabricated; an actual car test by dirt road (gravel road) running was carried out; and for the pneumatic tires after the running, the dirt road durability was evaluated in the following appearance grading of tread surfaces.

The "passenger vehicle tires" to be evaluated in Examples and Comparative Examples were tires having a tire size of 195/50R15 and a load index of 120 or lower.

Further the "truck and bus tires"(hereinafter, referred to also as "TB tire") to be evaluated in Examples and Comparative Examples were tires having a tire size of 245/70R19.5 and a load index of 134.

Here, the "load index" means an index to indicate a maximum load which one piece of tire can carry under a prescribed condition as provided by the "details of safety regulations for road vehicles has been promulgated under the authority of Road Vehicles Act" (as of March 31, 2015)(technical standards of passenger-vehicle pneumatic tires). Further, a weight (load capability) which a tire can carry is prescribed for each size thereof by the standard, and the load carrying capability is indicated on the tire as an index called the load index (LI) (for example, http://tire.bridgestone.co.jp/about/tire-size/size-indication/index.html#anc01). a: there were observed almost no cracks in a degree visible to the naked eye. b: there were observed a few cracks in a degree visible to the naked eye. c: there were a large number of cracks in a degree visible to the naked eye.

(3) Dry road steering stability

A passenger-vehicle pneumatic radial tire of a tire size of 195/50R15 and a truck and bus pneumatic tire for test of a tire size of 245/70R19.5 were trially fabricated, and installed on front wheels of a passenger car and a truck, respectively; and the car and the truck ran on a dry road; and the dry road steering stability was evaluated according to the following criteria by feeling of a test driver.

a: the dry road steering stability was very good.
b: the dry road steering stability was at an acceptable level.
c: the dry road steering stability was insufficient.

Examples 1 to 17 and Comparative Examples 1 to 17

Rubber compositions for Examples and Comparative Examples were prepared based on respective blend contents indicated in Tables 1 to 3. The obtained each rubber composition was used for treads, and there were manufactured a passenger-vehicle pneumatic radial tire of a tire size of 195/50R15 and a truck and bus pneumatic tire for test of a tire size of 245/70R19.5 by a conventional method. By using the obtained tires, there were evaluated the toughness (index) after thermal degradation, the appearance grading of the dirt road durability and the dry road steering stability of the pneumatic tires. The evaluation results are shown in Tables 1 to 3.

Table 1

| Blend Content (unit: parts by mass) | | Example | | | | | | | | | | | | | | Reference Example | Comp. Ex. 14 | Ex. 17 | Comp. Ex. 17 | Comparative Example | | | | | | | | | | | |
|---|---|---|---|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | | | | | 1 | 2 | 3 | 4 | 5 | 6 | 7 | 8 | 9 | 10 | 11 | 12 |
| | Natural Rubber *1 | 50 | 80 | 50 | 80 | 80 | 80 | 50 | 80 | 50 | 80 | 80 | 90 | 80 | 65 | 40 | 40 | 80 | 80 | 50 | 50 | 50 | 50 | 50 | 80 | 50 | 80 | 50 | 80 | 50 | 80 |
| | Polybutadiene Rubber *2 | 50 | 20 | 50 | 20 | 20 | 20 | 50 | 20 | 50 | 20 | 15 | 5 | 5 | 5 | 20 | 20 | 20 | 20 | 50 | 50 | 50 | 50 | 50 | 20 | 50 | 20 | 50 | 20 | 50 | 20 |
| | Styrene-Butadiene Rubber *18 | 0 | 0 | 0 | 0 | 0 | 0 | 0 | 0 | 0 | 0 | 5 | 5 | 15 | 30 | 40 | 40 | 0 | 0 | 0 | 0 | 0 | 0 | 0 | 0 | 0 | 0 | 0 | 0 | 0 | 0 |
| | Carbon Black *3 | 5 | 5 | 5 | 5 | 5 | 5 | 5 | 5 | 5 | 5 | 5 | 5 | 5 | 5 | 52 | 50 | 5 | 5 | 5 | 5 | 5 | 5 | 5 | 5 | 5 | 5 | 5 | 5 | 5 | 5 |
| | Silica *4 | 70 | 70 | 70 | 70 | 70 | 70 | 70 | 70 | 70 | 70 | 70 | 70 | 70 | 70 | 0 | 0 | 70 | 70 | 70 | 70 | 70 | 70 | 70 | 70 | 70 | 70 | 70 | 70 | 70 | 70 |
| | Silane Coupling Agent *5 | 5.6 | 5.6 | 5.6 | 5.6 | 5.6 | 5.6 | 5.6 | 5.6 | 5.6 | 5.6 | 5.6 | 5.6 | 5.6 | 5.6 | 0 | 0 | 5.6 | 5.6 | 5.6 | 5.6 | 5.6 | 5.6 | 5.6 | 5.6 | 5.6 | 5.6 | 5.6 | 5.6 | 5.6 | 5.6 |
| | Rosin Acid Resin *6 | 30 | 30 | 0 | 0 | 0 | 0 | 0 | 0 | 0 | 0 | 30 | 30 | 30 | 30 | 0 | 0 | 30 | 30 | 0 | 0 | 0 | 0 | 30 | 30 | 0 | 0 | 0 | 0 | 0 | 0 |
| | C9-Based Petroleum Resin *7 | 0 | 0 | 30 | 30 | 30 | 30 | 0 | 0 | 0 | 0 | 0 | 0 | 0 | 0 | 30 | 30 | 0 | 0 | 0 | 0 | 0 | 0 | 0 | 0 | 30 | 30 | 0 | 0 | 0 | 0 |
| | Alkylphenol Formaldehyde Resin *8 | 0 | 0 | 0 | 0 | 0 | 0 | 30 | 30 | 0 | 0 | 0 | 0 | 0 | 0 | 0 | 0 | 0 | 0 | 0 | 0 | 0 | 0 | 0 | 0 | 0 | 0 | 30 | 30 | 0 | 0 |
| | Terpene Phenol Resin *9 | 0 | 0 | 0 | 0 | 0 | 0 | 0 | 0 | 30 | 30 | 0 | 0 | 0 | 0 | 0 | 0 | 0 | 0 | 0 | 0 | 0 | 0 | 0 | 0 | 0 | 0 | 0 | 0 | 30 | 30 |
| | C5/C9-Based Petroleum Resin *10 | 0 | 0 | 0 | 0 | 0 | 0 | 0 | 0 | 0 | 0 | 0 | 0 | 0 | 0 | 0 | 0 | 0 | 0 | 30 | 30 | 0 | 0 | 0 | 0 | 0 | 0 | 0 | 0 | 0 | 0 |
| | Zinc Stearate *11 | 4 | 4 | 4 | 4 | 0 | 4 | 4 | 4 | 4 | 4 | 4 | 4 | 4 | 4 | 4 | 0 | 4 | 0 | 4 | 0 | 4 | 0 | 0 | 0 | 0 | 0 | 0 | 0 | 0 | 0 |
| | Potassium Stearate *12 | 0 | 0 | 0 | 0 | 4 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | Sodium Stearate *13 | 0 | 0 | 0 | 0 | 0 | 4 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | Antioxidant *14 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Stearic Acid | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Zinc Oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Vulcanization Accelerator DPG *15 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| | Vulcanization Accelerator CZ *16 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |
| | Vulcanization Accelerator DM *17 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 | 1.9 |
| Kind of Tire | | passenger-vehicle pneumatic tire | | | | | | | | | | | | | | TB tire | | TB tire | | passenger-vehicle pneumatic tire | | | | | | | | | | | |
| Toughness (Index) after Thermal Degradation | | 130 | 140 | 135 | 144 | 135 | 136 | 131 | 141 | 135 | 143 | 145 | 147 | 122 | 102 | 60 | 55 | 139 | 100 | 125 | 100 | 85 | 81 | 105 | 110 | 106 | 113 | 104 | 112 | 107 | 110 |
| Appearance Grading of Dirt road Durability of Pneumatic Tire | | a | a | a | a | a | a | a | a | a | a | a | a | a | a | c | c | b | c | a | c | c | c | c | c | c | b | c | b | c | b |
| Dry Road Steering Stability | | a | a | a | a | a | a | a | a | a | a | a | a | a | a | a | a | a | a | c | b | a | a | a | a | a | a | a | a | a | a |

Table 2

| | | Example | Comparative Example |
|---|---|---|---|
| | | 15 | 15 |
| Blend Content (unit: parts by mass) | Natural Rubber *1 | 80 | 80 |
| | Polybutadiene Rubber *2 | 20 | 20 |
| | Carbon Black *3 | 16 | 16 |
| | Silica *4 | 64 | 64 |
| | Silane Coupling Agent *5 | 5.6 | 5.6 |
| | Rosin Acid Resin *6 | 30 | 30 |
| | C9-Based Petroleum Resin *7 | 0 | 0 |
| | Alkylphenol Formaldehyde Resin *8 | 0 | 0 |
| | Terpene Phenol Resin *9 | 0 | 0 |
| | C5/C9-Based Petroleum Resin *10 | 0 | 30 |
| | Zinc Stearate *11 | 4 | 4 |
| | Potassium Stearate *12 | 0 | 0 |
| | Sodium Stearate *13 | 0 | 0 |
| | Antioxidant *14 | 1 | 1 |
| | Stearic Acid | 1 | 1 |
| | Zinc Oxide | 2.5 | 2.5 |
| | Vulcanization Accelerator DPG *15 | 0.8 | 0.8 |
| | Vulcanization Accelerator CZ *16 | 1.1 | 1.1 |
| | Vulcanization Accelerator DM *17 | 1 | 1 |
| | Sulfur | 1.9 | 1.9 |
| Kind of Tire | | passenger-vehicle pneumatic tire | |
| Toughness (Index) after Thermal Degradation | | 109 | 100 |
| Appearance Grading of Dirt road Durability of Pneumatic Tire | | a | b |
| Dry Road Steering Stability | | a | b |

Table 3

| | | Example | Comparative Example |
|---|---|---|---|
| | | 16 | 16 |
| Blend Content (unit: parts by mass) | Natural Rubber *1 | 80 | 80 |
| | Polybutadiene Rubber *2 | 20 | 20 |
| | Carbon Black *3 | 32 | 32 |
| | Silica *4 | 48 | 48 |
| | Silane Coupling Agent *5 | 5.6 | 5.6 |
| | Rosin Acid Resin *6 | 30 | 30 |
| | C9-Based Petroleum Resin *7 | 0 | 0 |
| | Alkylphenol Formaldehyde Resin *8 | 0 | 0 |
| | Terpene Phenol Resin *9 | 0 | 0 |
| | C5/C9-Based Petroleum Resin *10 | 0 | 30 |
| | Zinc Stearate *11 | 4 | 4 |
| | Potassium Stearate *12 | 0 | 0 |
| | Sodium Stearate *13 | 0 | 0 |
| | Antioxidant *14 | 1 | 1 |
| | Stearic Acid | 1 | 1 |
| | Zinc Oxide | 2.5 | 2.5 |
| | Vulcanization Accelerator DPG *15 | 0.8 | 0.8 |
| | Vulcanization Accelerator CZ *16 | 1.1 | 1.1 |
| | Vulcanization Accelerator DM *17 | 1 | 1 |
| | Sulfur | 1.9 | 1.9 |
| Kind of Tire | | passenger-vehicle pneumatic tire | |
| Toughness (Index) after Thermal Degradation | | 107 | 100 |
| Appearance Grading of Dirt road Durability of Pneumatic Tire | | a | b |
| Dry Road Steering Stability | | a | a |

[notes]

*1: natural rubber: "SIR20", produced in Indonesia

*2: polybutadiene rubber: trade name "BR01", manufactured by JSR Corp.

*3: carbon black: N220(ISAF), trade name "#80", manufactured by Asahi Carbon Co., Ltd.

*4: silica: trade name "Nipsil AQ"(BET specific surface area: 205 $m^2$/g), manufactured by Tosoh Silica Corp.)

*5: silane coupling agent: bis(3-triethoxysilylpropyl) disulfide (average sulfur chain length: 2.35), trade name "Si75"(registered trademark), manufactured by Evonik Degussa GmbH

*6: rosin acid resin: trade name "High Rosin(registered trademark) S", manufactured by Taisha pine essential oil Co., Ltd.

*7: C9-based petroleum resin: trade name "Nisseki Neopolymer(registered trademark) 140", manufactured by JX Nippon Oil & Energy Corp.

*8: alkylphenol formaldehyde resin: trade name "R7510PJ", manufactured by SI group Inc.

*9: terpene-phenol resin: trade name "YS Polyster(registered trademark) S145", manufactured by Yasuhara Chemical Co., Ltd.

*10: C5/C9-based petroleum resin: trade name "Quintone(registered trademark) G100B", manufactured by Zeon Corp.

*11: zinc stearate: manufactured by Sigma-Aldrich Corp., product number "307564"

*12: potassium stearate: manufactured by Sigma-Aldrich Corp., product number "24-5570"

*13: sodium stearate: manufactured by Sigma-Aldrich Corp., product number "S3381"

*14: antioxidant: N-(1,3-dimethylbutyl)-N'-phenyl-p-phenylenediamine, trade name "Nocrac(registered trademark) 6C", manufactured by Ouchi Shinko Chemical Industrial Co., Ltd.

*15: vulcanization accelerator DPG: trade name "Soxinol(registered trademark) D-G", manufactured by Sumitomo Chemical Co., Ltd.

*16: vulcanization accelerator CZ: trade name "Nocceler(registered trademark) CZ-G", manufactured by Ouchi Shinko Chemical Industrial Co., Ltd.

*17: vulcanization accelerator DM: trade name "Nocceler(registered trademark) DM-P", manufactured by Ouchi Shinko Chemical Industrial Co., Ltd.

*18: styrene-butadiene rubber: trade name "JSR1500", manufactured by JSR Corp.

As is clear from Table 1, since the rubber compositions of Examples 1 to 10 contained a rubber component containing 30% by mass or higher of an isoprene-based rubber, together with a (B) resin and a (C) fatty acid metal salt blended therein, the dry road steering stability and the dirt road durability of the pneumatic tires could simultaneously be improved.

INDUSTRIAL APPLICABILITY

The rubber composition is, since being capable of largely improving the dirt road durability of pneumatic tires, suitably used for tread members of various types of pneumatic tires including passenger-vehicle (including light passenger-vehicle also), light truck, truck and bus, and off-the-road (construction-vehicle, mine-vehicle) tires, and suitably used particularly for tread members of passenger-vehicle pneumatic tires.

**Claims**

1.  A passenger-vehicle pneumatic tire, wherein a rubber composition is used for a tread member of the pneumatic tire, wherein the rubber composition, comprising (A) a rubber component comprising 30% by mass or higher of one or more isoprene-based rubbers selected from the group consisting of natural rubbers and synthetic isoprene rubbers, and (B) at least one resin selected from the group consisting of rosin acid resins, C9-based petroleum resins, alkylphenol formaldehyde resins and terpene phenol resins in an amount of 5 to 50 parts by mass, and (C) a fatty acid metal salt in an amount of 0.5 to 10 parts by mass, both based on 100 parts by mass of the rubber component.

2.  The passenger-vehicle pneumatic tire according to claim 1, wherein the (A) rubber component comprises the isoprene-based rubber in a proportion of 50 to 100% by mass.

3.  The passenger-vehicle pneumatic tire according to claim 1, wherein the (A) rubber component comprises a styrene-butadiene copolymer rubber in a proportion of 1 to 30% by mass.

4.  The passenger-vehicle pneumatic tire according to any one of claims 1 to 3, the rubber composition further comprising a reinforcing filler, wherein the reinforcing filler comprises a silica in a proportion of 50% by mass or higher.

5.  The passenger-vehicle pneumatic tire according to any one of claims 1 to 4, wherein a content of the (B) at least one resin selected from the group consisting of rosin acid resins, C9-based petroleum resins, alkylphenol formaldehyde resins and terpene phenol resins is 10 to 50 parts by mass based on 100 parts by mass of the (A) rubber component.

**Patentansprüche**

1.  Luftreifen für Personenfahrzeug, wobei eine Kautschukzusammensetzung für ein Laufflächenelement des Luftreifens verwendet wird, wobei die Kautschukzusammensetzung (A) eine Kautschukkomponente, umfassend zu 30 Massen-% oder darüber ein oder mehrere isoprenbasierte Kautschuke, ausgewählt aus der Gruppe, bestehend aus Naturkautschuken und synthetischen Isoprenkautschuken, und (B) mindestens ein Harz, ausgewählt aus der Gruppe, bestehend aus Kolophoniumsäureharzen, C9-basierten Erdölharzen, Alkylphenolformaldehydharzen und Terpenphenolharzen in einer Menge von 5 bis 50 Massenteilen, und (C) ein Metallsalz einer Fettsäure in einer Menge von 0,5 bis 10 Massenteile, beide bezogen auf 100 Massenteile der Kautschukkomponente, umfasst.

2.  Luftreifen für Personenfahrzeug nach Anspruch 1, wobei die (A) Kautschukkomponente den isoprenbasierten Kautschuk in einem Anteil von 50 bis 100 Massen-% umfasst.

3.  Luftreifen für Personenfahrzeug nach Anspruch 1, wobei die (A) Kautschukkomponente einen Styrol-Butadien-Copolymerkautschuk in einem Anteil von 1 bis 30 Massen-% umfasst.

4.  Luftreifen für Personenfahrzeug nach einem der Ansprüche 1 bis 3, wobei die Kautschukzusammensetzung ferner einen verstärkenden Füllstoff umfasst, wobei der verstärkende Füllstoff ein Siliciumdioxid in einem Anteil von 50 Massen-% oder darüber umfasst.

5.  Luftreifen für Personenfahrzeug nach einem der Ansprüche 1 bis 4, wobei ein Gehalt an dem (B) mindestens einen Harz, ausgewählt aus der Gruppe, bestehend aus Kolophoniumsäureharzen, C9-basierten Erdölharzen, Alkylphenolformaldehydharzen und Terpenphenolharzen, bezogen auf 100 Massenteile der (A) Kautschukkomponente, 10 bis 50 Massenteile beträgt.

**Revendications**

1. Pneumatique pour voiture de tourisme, une composition de caoutchouc étant utilisée pour un élément de bande de roulement du pneumatique, la composition de caoutchouc comprenant (A) un constituant de caoutchouc comprenant 30 % en masse ou plus d'un ou plusieurs caoutchoucs à base d'isoprène choisis dans le groupe constitué par les caoutchoucs naturels et les caoutchoucs d'isoprène synthétiques et (B) au moins une résine choisie dans le groupe constitué par les résines d'acide de colophane, les résines de pétrole à base de C9, les résines d'alkylphénol-formaldéhyde et les résines de terpène-phénol en une quantité de 5 à 50 parties en masse et (C) un sel métallique d'acide gras en une quantité de 0,5 à 10 parties en masse, l'un et l'autre sur la base de 100 parties en masse du constituant de caoutchouc.

2. Pneumatique pour voiture de tourisme selon la revendication 1, le constituant de caoutchouc (A) comprenant le caoutchouc à base d'isoprène en une proportion de 50 à 100 % en masse.

3. Pneumatique pour voiture de tourisme selon la revendication 1, le constituant de caoutchouc (A) comprenant un caoutchouc de copolymère de styrène-butadiène en une proportion de 1 à 30 % en masse.

4. Pneumatique pour voiture de tourisme selon l'une quelconque des revendications 1 à 3, la composition de caoutchouc comprenant en outre une charge renforçante, la charge renforçante comprenant une silice en une proportion de 50 % en masse ou plus.

5. Pneumatique pour voiture de tourisme selon l'une quelconque des revendications 1 à 4, une teneur en ladite au moins une résine (B) choisie dans le groupe constitué par les résines d'acide de colophane, les résines de pétrole à base de C9, les résines d'alkylphénol-formaldéhyde et les résines de terpène-phénol allant de 10 à 50 parties en masse sur la base de 100 parties en masse du constituant de caoutchouc (A).

**EP 3 150 660 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011158509 A1

- JP 2009235274 A